# EUROPÄISCHE PATENTSCHRIFT

(11) **EP 0 844 942 B1**
(45) Veröffentlichungstag und Bekanntmachung des Hinweises auf die Patenterteilung: **29.03.2000**
(21) Anmeldenummer: 96928270.6
(22) Anmeldetag: 05.09.1996
(51) Int. Cl.: B60P 1/44

(54) **BEFESTIGUNGSVORRICHTUNG FÜR EINE LADEBORDWAND EINES LASTFAHRZEUGES**
SECURING DEVICE FOR A SIDE WALL OF A GOODS VEHICLE LOAD PLATFORM
DISPOSITIF DE FIXATION DE LA PAROI LATERALE DE LA PLATE-FORME DE CHARGEMENT D'UN VEHICULE A MARCHANDISES

(30) Priorität: 07.09.1995 AT 148795; 01.12.1995 AT 197095
(43) Veröffentlichungstag der Anmeldung: 03.06.1998
(73) Patentinhaber: Weber, Walter, 851 10 Bratislava, Jarovce (SK)
(72) Erfinder: Weber, Walter, 851 10 Bratislava, Jarovce (SK)
(74) Vertreter: Holzer, Walter, Dipl.-Ing.
(86) Internationale Anmeldenummer: AT9600158
(87) Internationale Veröffentlichungsnummer: WO9709197

(56) Entgegenhaltungen:
- EP-A- 0 347 791
- EP-A- 0 662 405
- DE-A- 2 313 458
- DE-A- 3 129 789
- FR-A- 2 704 300

## Beschreibung

Die Erfindung betrifft eine Befestigungsvorrichtung für eine hydraulisch betätigbare Ladebordwand eines Lastfahrzeuges, mit einem an der Hinterseite des Fahrzeugrahmens befestigbaren Querträger für die Ladebordwand, an welchem mit Abstand voneinander symmetrisch zur Fahrzeuglängsmittelebene Lagerflansche mit Durchgängen für die Lagerbolzen von Hub- und Schwenkorganen der Ladebordwand vorgesehen sind.

Bei bekannten Ladebordwandkonstruktionen ist der fahrzeugseitige Querträger für die Ladebordwand durch ein Vierkantrohr gebildet, an welchem Vierkantmuffen mit Lagerflanschen für die Hub- und Schwenkorgane angeschweißt werden (DE 31 29 789) oder auf welchen Vierkantmuffen beidseitig aufgeschoben und mittels Haltebriden oder sonstigen Befestigungselementen, z.B. mittels Schrauben, verankert werden. Die Lagerflansche, die mit genau bearbeiteten zylindrischen Aufnahmen für die Lagerbolzen der Hubarme und Schwenkorgane versehen sind, müssen an die Vierkantmuffen angepaßt und mit diesen durch Schweißen verbunden werden. An der Stirnseite der Ladebordwand sind an jenen Stellen, an denen die Hub- und Schwenkarme angreifen sollen, als spezielle Gußteile ausgebildete Einsätze vorgesehen, welche ebenfalls bearbeitete Lagerbolzenaufnahmen aufweisen und mit benachbarten Stirnwandprofilen sowie mit der eigentlichen Ladeplattform verschweißt werden müssen.

Insgesamt erweist sich diese bekannte Konstruktion als relativ aufwendig, weil eine Reihe von gesonderten Bestandteilen hergestellt werden muß, die nacheinander durch Schweißen und Schrauben miteinander verbunden werden müssen. Abgesehen vom Herstellungsaufwand erhöht sich auch das Gewicht des Fahrzeuges und es sind längere Montagezeiten erforderlich. Darüber hinaus muß für jede Fahrzeugtype ein eigener Anbausatz hergestellt werden, weil die Fahrzeuge unterschiedliche Breite haben.

Die Erfindung zielt darauf ab, eine Befestigungsvorrichtung der einleitend angegebenen Art zu schaffen, die auf einfache Weise und kostengünstig hergestellt werden kann, mit einer geringen Anzahl von Bestandteilen auskommt und eine rasche Montage der Vorrichtung sowie leichte Anpassung an unterschiedliche Fahrzeugtypen bei gleichzeitiger Gewichtseinsparung ermöglicht. Die erfindungsgemäße Befestigungsvorrichtung zeichnet sich dadurch aus, daß der fahrzeugseitige Querträger aus einem stranggepreßten Hohlkastenprofil aus Aluminium mit im wesentlichen viereckigem Querschnitt gebildet ist, das an seiner Oberseite und an seiner Unterseite über die Profillänge durchgehende Nuten zur form- und kraftschlüssigen Rastaufnahme der Enden von Kragarmen der Lagerflasche für die Hub- und Schwenkorgane aufweist, wobei die Lagerflansche aus Abschnitten eines stranggepreßten Hohlprofiles aus Aluminium gebildet sind, und daß an der Stirnseite der Ladebordwand ebenfalls durch Abschnitte eines stranggepreßtes Hohlprofiles aus Aluminium gebildete Lagerflansche vorgesehen sind, welche zylindrische Durchgänge zur Aufnahme der Lagerbolzen der Hub- und Schwenkorgane aufweisen und mit der eigentlichen Ladeplattform verschweißt sind.

Vorzugsweise sind die in Längsnuten des Hohlkastenprofils eingerasteten Kragarmenden der Lagerflansche zusätzlich mit dem Hohlkastenprofil verschweißt.

Die erfindungsgemäße Konstruktion ermöglicht es, die gesamte Befestigungsvorrichtung der Ladebordwand aus wenigen Grundbestandteilen aufzubauen, z.B. aus drei stranggepreßten Aluminium-Hohlprofilen. Der Aufbau der Vorrichtung gestaltet sich sehr einfach, weil die Lagerflansche nach dem Abschneiden ohne weitere Bearbeitung mit dem Hohlkastenprofil verrastet werden können, wobei die anschließende zusätzliche Fixierung durch kurze Schweißnähte bzw. Schweißpunkte erfolgt. Die Durchgänge der Lagerflansche brauchen nicht weiter bearbeitet, sondern lediglich gerieben zu werden und sind danach sofort für die Aufnahme der Lagerbolzen der Hub- und Schwenkorgane bereit. Die Erfindung ermöglicht zugleich eine einfache Anpassung der Konstruktion an unterschiedliche Fahrzeuge, weil die Lagerflansche in die Längsnuten des Hohlkastenprofiles an einer beliebigen Stelle eingerastet und vor dem Anschweißen der Armenden in den Nuten auch verschoben werden können.

Gemäß einer bevorzugten Ausführungsform der Erfindung weist das Hohlkastenprofil auf seinem Umfang verteilt hinterschnittene Längsnuten zur Aufnahme der Muttern von Verankerungsbolzen für die Befestigung des Hohlkastenprofiles am Fahrzeugrahmen auf.

Nach einem weiteren Merkmal der Erfindung sind die an der Stirnseite der Ladebordwand vorgesehenen Lagerflansche auf der ihren zylindrischen Durchgängen abgekehrten Seite mit Kragarmen versehen, über welche sie mit der eigentlichen Ladeplattform verschweißt sind.

Alternativ kann vorgesehen werden, daß die an der Stirnseite der Ladebordwand vorgesehenen Lagerflansche je aus zwei Teilprofilen zusammengesetzt sind, von denen ein oberes Teilprofil, mit der Ladeplattform verschweißt und ein unteres Teilprofil über Kragarme in Nuten des oberen Teilprofiles form- und kraftschlüssig eingerastet ist und die eingerasteten Kragarmenden vorzugsweise zusätzlich mit dem oberen Teilprofil verschweißt sind.

Ein anderes Ausführungsbeispiel der Erfindung hat die Merkmale, daß in den Wänden des Hohlkastenprofiles in Profillängsrichtung verlaufende Kanäle zur Führung der Hydraulikflüssigkeit ausgebildet sind, die über an den Anschlußstellen des Hydraulikaggregates der Hub- und Schwenkorgane in den Wänden des Hohlkastenprofiles ausgebildete und bis zu den Kanälen reichende Gewindebohrungen mit den Hydraulikleitungen des Hydraulikaggregates bzw. der Hub- und Schwenkorgane verbindbar sind.

Durch diese Ausführung braucht an der Anschlußstelle des jeweiligen Hydraulikaggregates lediglich eine Gewindebohrung zum Anschluß der Rohrleitung des Hydraulikaggregates ausgebildet werden, wobei diese Gewindebohrung mit dem Kanal für die Hydraulikflüssigkeit in Verbindung steht und das Anschlußelement der Hydraulikaggregatleitung aufnimmt.

Die Erfindung wird nachfolgend an Ausführungsbeispielen unter Bezugnahme auf die schematischen Zeichnungen näher erläutert. Es zeigen:
Fig. 1 den fahrzeugseitigen Teil einer Befestigungsvorrichtung gemäß der Erfindung zum Teil im Querschnitt,
Fig. 2 den ladebordwandseitigen Teil der Vorrichtung teils in Ansicht und teils im Schnitt,
Fig. 3 eine alternative Ausbildung des ladebordwandseitigen Teiles der Befestigungsvorrichtung, ebenfalls teils in Ansicht und teils im Schnitt, und
Fig. 4 den fahrzeugseitigen Teil einer anderen Befestigungsvorrichtung gemäß der Erfindung zum Teil im Querschnitt.

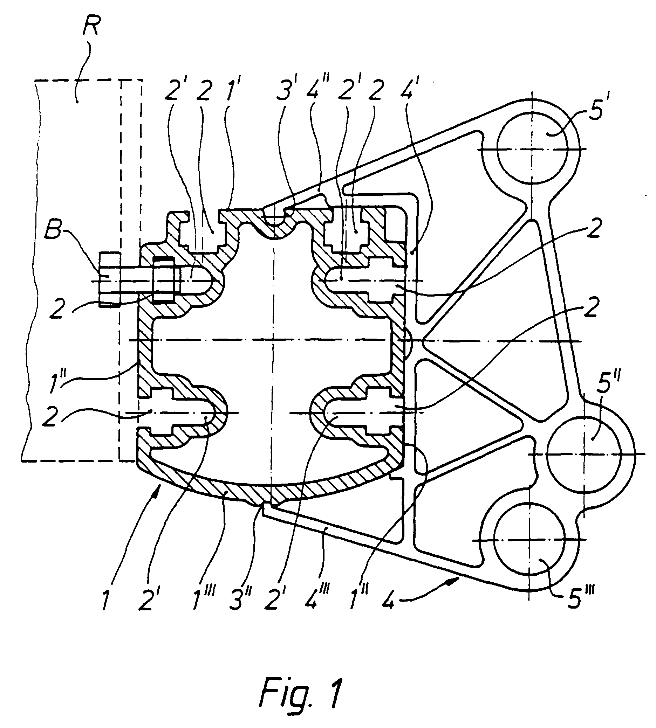

Gemäß Fig. 1 weist der fahrzeugseitige Teil der Befestigungsvorrichtung ein stranggepreßtes Hohlkastenprofil 1 aus Aluminium auf, welches durch Bolzen B an dem in Fig. 1 angedeuteten hinteren Rahmenquerteil R des Lastfahrzeuges befestigt wird. Die Bolzenmuttern werden dabei in hinterschnittenen Längsnuten 2 des Hohlkastenprofiles 1 aufgenommen. Die an den vertikalen Profilseiten vorgesehenen Nuten 2 sind mit rinnenförmigen Böden 2' versehen, in denen elektrische und/oder hydraulische Leitungen untergebracht werden können. Das Hohlkastenprofil hat eine flache Oberseite 1', zwei vertikale Seitenwände 1" und eine konvex gewölbte Unterseite 1"'. An der Ober- und Unterseite 1' bzw. 1" des Hohlkastenprofiles 1 sind in dessen Längsrichtung verlaufende Nuten 3' bzw. 3" ausgebildet, über welche Lagerflansche 4 mit gegenseitigem Abstand mit dem Hohlkastenprofil 1 verbunden werden, wie dies nachstehend erläutert wird.

Die Lagerflansche 4 sind Abschnitte eines ebenfalls stranggepreßten Aluminium-Hohlprofiles mit einem vertikalen Steg 4', von dessen oberem und unterem Ende Arme 4", 4"' auskragen, welche mit ihren freien Enden in die Längsnuten 3', 3" des Hohlkastenprofiles 1 form- und kraftschlüssig eingerastet werden. Dazu ist die obere Längsnut 3' im Querschnitt gerundet, um das als runder Wulst ausgebildete Ende des Armes 4" aufzunehmen. Dieser Arm wird zuerst eingesetzt und der andere Arm 4"' nach dem Verschwenken des Lagerflansches 4 in die Rastnut 3" eingerastet. Zusätzlich wird die Rastverbindung der Kragarmenden durch nicht gezeigte Schweißnähte fixiert.

Jeder Lagerflansch 4 wird in der jeweils erforderlichen Breite bzw. Stärke von dem einstückigen stranggepreßten Hohlprofil abgeschnitten. Der Lagerflansch 4 weist eine Reihe von inneren Kammern und Stegen auf und hat auf seiner den Armen 4", 4‴ abgekehrten Seite gemäß Fig. 1 drei zylindrische Durchgänge 5', 5", 5"' zur Aufnahme der (nicht gezeigten) Lagerbolzen für einen Hubarm, einen Schwenkzylinder und einen Hubzylinder der Ladebordwand. Die Ausbildung der Lagerflansche 4 als Abschnitte eines mit großer Genauigkeit stranggepreßten Hohlprofiles hat den Vorteil, daß die Durchgänge 5 nur gerieben werden müssen und keiner sonstigen Bearbeitung bedürfen.

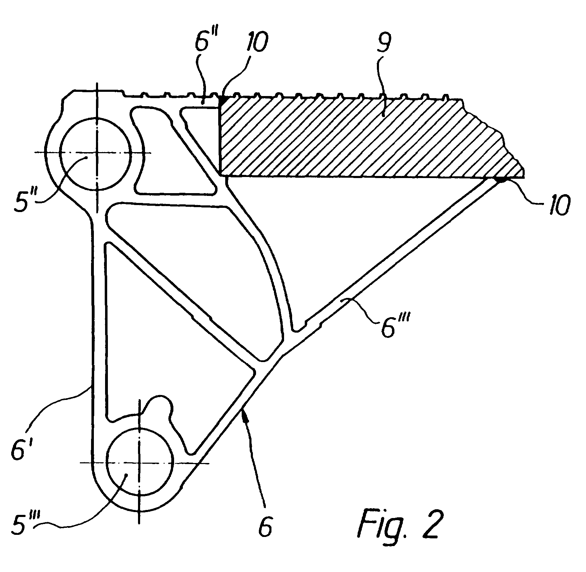

Gemäß Fig. 2 ist die den Lagerflanschen 4 gegenüberliegende Stirnseite der weiter nicht gezeigten Ladebordwand, an welcher die Hub- und Schwenkarme angreifen, ebenfalls mit Lagerflanschen 6 versehen, die aus Abschnitten eines stranggepreßten Aluminium-Hohlprofiles gebildet sind, welches einen vertikalen Steg 6' und an dessen Ober- und Unterseite zylindrische Durchgänge 5", 5"' zur Aufnahme der Lagerbolzen für den Hubzylinder bzw. den Schwenkzylinder aufweist. Das Hohlprofil 6 hat ebenfalls innere Kammern und Stege sowie ferner auskragende Arme 6", 6"' über welche es an der eigentlichen, ebenfalls aus Aluminiumteilen bestehenden Ladeplattform 9, welche die Lastaufnahmefläche bildet, durch Schweißnähte 10 befestigt werden.

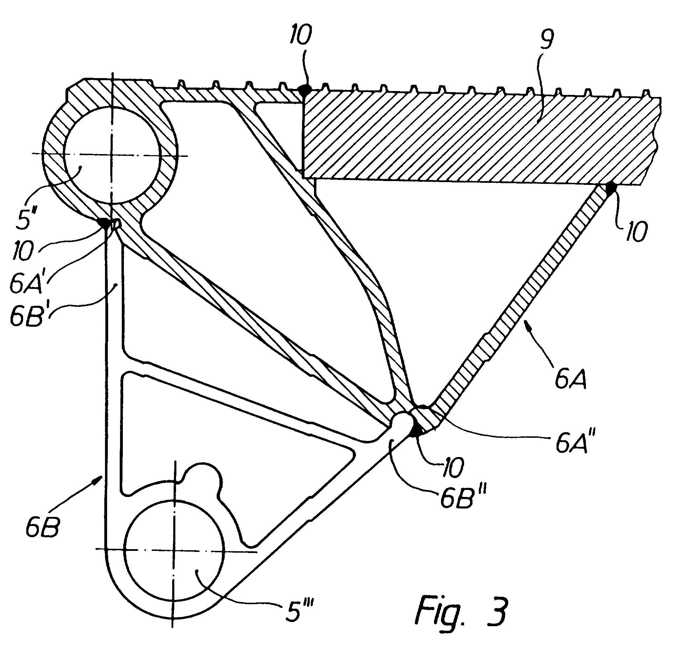

Wie Fig. 3 zeigt, können die Lagerflansche 6 der Ladeplattform zweiteilig ausgebildet sein, d.h. aus Abschnitten zweier verschiedener Strangpreßhohlprofile aus Aluminium gebildet sein. Das obere Teilprofil 6A wird mit der eigentlichen Ladeplattform 9 wie bei der Ausführung nach Fig. 3 über Schweißnähte 10 verbunden, wogegen der untere Teil über Kragarme 6B', 6B" in Nuten 6A', 6A" des oberen Teiles form- und kraftschlüssig eingerastet und zusätzlich über Schweißnähte 10 an diesem festgelegt wird. Das obere Teilprofil 6A enthält den Durchgang 5" für den Hubzylinder und das untere Teilprofil 6B den Durchgang 5"' für den Schwenkzylinder.

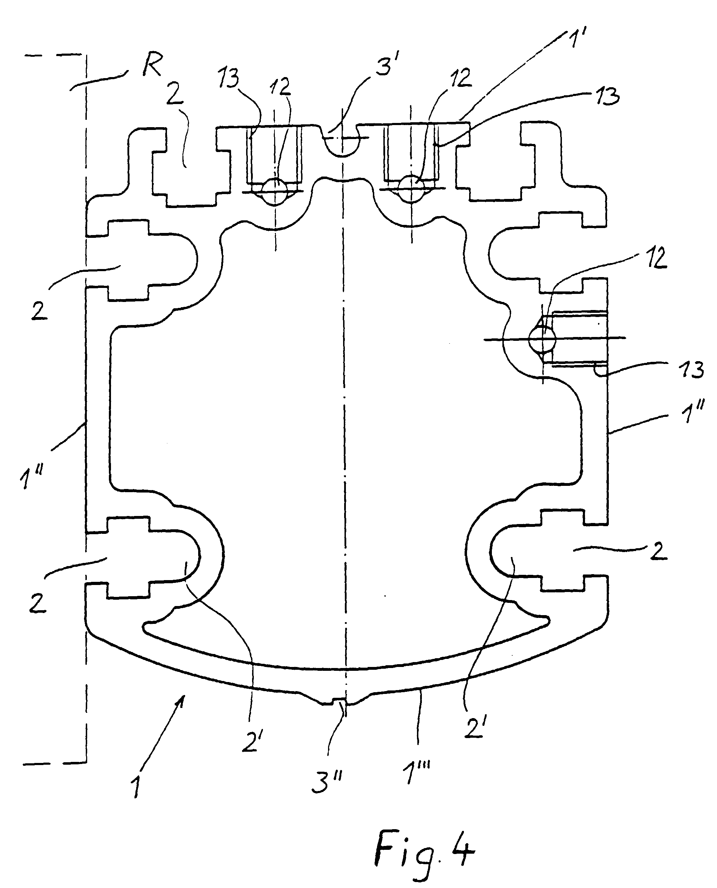

Gemäß Fig. 4 werden in den Wänden des Hohlkastenprofiles beim Strangpreßvorgang Längskanäle 12 ausgebildet, die als Leitungen für die Hydraulikflüssigkeit von der Anschlußstelle des Hydraulikaggregates zu den Anschlußstellen der Lagerflansche der Hub- und Schwenkorgane dienen. An diesen Anschlußstellen werden in den Wänden des Hohlkastenprofils Gewindebohrungen 13 ausgebildet, die bis zu den Strömungskanälen 12 reichen und in welche die (nicht gezeigte) jeweilige Hydraulikleitung des Hydraulikaggregates bzw. der Hub- und Schwenkorgane eingeschraubt wird. Durch diese Schraubverbindung wird auf einfache Weise ein direkter Anschluß zwischen diesen Hydraulikleitungen und den Kanälen des Hohlkastenprofiles hergestellt, wodurch ein gesondertes Verlegen von Hydraulikleitungen im Hohlkastenprofil und die Leckgefahr vermieden werden.

Es versteht sich, daß die erläuterten Ausführungsbeispiele verschiedentlich abgewandelt werden können, insbesondere was die Gestaltung der einzelnen stranggepreßten Aluminiumprofile und deren zusätzliche Fixierung z.B. am Hohlkastenprofil betrifft, die z.B. statt durch Schweißen auch durch Schrauben erfolgen könnte.

## Patentansprüche

1. Befestigungsvorrichtung für eine hydraulisch betätigbare Ladebordwand eines Lastfahrzeuges, mit einem an der Hinterseite des Fahrzeugrahmens befestigbaren Querträger für die Ladebordwand, an welchem mit Abstand voneinander symmetrisch zur Fahrzeuglängsmittelebene Lagerflansche (4) mit Durchgängen (5', 5", 5"') für die Lagerbolzen von Hub- und Schwenkorganen der Ladebordwand vorgesehen sind, dadurch gekennzeichnet, daß der fahrzeugseitige Querträger aus einem stranggepreßten Hohlkastenprofil (1) aus Aluminium mit im wesentlichen viereckigem Querschnitt gebildet ist, das an seiner Oberseite (1') und an seiner Unterseite (1") über die Profillänge durchgehende Nuten (3', 3") zur form- und kraftschlüssigen Rastaufnahme der Enden von Kragarmen (4", 4"') der Lagerflansche (4) für die Hub- und Schwenkorgane aufweist, wobei die Lagerflansche (4) aus Abschnitten eines stranggepreßten Hohlprofiles aus Aluminium gebildet sind, und daß an der Stirnseite der Ladebordwand ebenfalls durch Abschnitte eines stranggepreßten Hohlprofiles aus Aluminium gebildete Lagerflansche (6) vorgesehen sind, welche zylindrische Durchgänge (5", 5"') zur Aufnahme der Lagerbolzen der Hub- und Schwenkorgane aufweisen und mit der eigentlichen Ladeplattform (9) verschweißt sind.

2. Befestigungsvorrichtung nach Anspruch 1, dadurch gekennzeichnet, daß die in die Längsnuten (3', 3") des Hohlkastenprofils (1) eingerasteten Kragarmenden der Lagerflansche (4) zusätzlich mit dem Hohlkastenprofil (1) verschweißt sind.

3. Befestigungsvorrichtung nach Anspruch 1 oder 2, dadurch gekennzeichnet, daß das Hohlkastenprofil (1) auf seinem Umfang verteilt hinterschnittene Längsnuten (2, 2') zur Aufnahme der Muttern von Verankerungsbolzen (B) für die Befestigung des Hohlkastenprofils am Fahrzeugrahmen (R) aufweist.

4. Befestigungsvorrichtung nach Anspruch 3, dadurch gekennzeichnet, daß die Längsnuten (2, 2') zur Aufnahme von hydraulischen und/oder elektrischen Leitungen dienen.

5. Befestigungsvorrichtung nach einem der Ansprüche 1 bis 3, dadurch gekennzeichnet, daß in den Wänden des Hohlkastenprofiles (1) in Profillängsrichtung verlaufende Kanäle (12) zur Führung der Hydraulikflüssigkeit ausgebildet sind, die über an den Anschlußstellen des Hydraulikaggregates sowie der Hub- und Schwenkorgane in den Wänden des Hohlkastenprofiles ausgebildete und bis zu den Kanälen reichende Gewindebohrungen (13) mit den Hydraulikleitungen des Hydraulikaggregates bzw. der Hub- und Schwenkorgane verbindbar sind.

6. Befestigungsvorrichtung nach einem der Ansprüche 1 bis 5, dadurch gekennzeichnet, daß die an der Stirnseite der Ladebordwand vorgesehenen Lagerflansche (6) auf der ihren zylindrischen Durchgängen (5", 5"') abgekehrten Seite mit Kragarmen (6", 6"') versehen sind, über welche sie mit der eigentlichen Ladeplattform (9) verschweißt sind.

7. Befestigungsvorrichtung nach einem der Ansprüche 1 bis 5, dadurch gekennzeichnet, daß die an der Stirnseite der Ladebordwand vorgesehenen Lagerflansche (6) je aus zwei Teilprofilen (6A, 6B) zusammengesetzt sind, von denen ein oberes Teilprofil (6A) mit der Ladeplattform (9) verschweißt und ein unteres Teilprofil (6B) über Kragarme (4B', 4B") in Nuten (6A', 6A") des oberen Teilprofiles form- und kraftschlüssig eingerastet ist und die eingerasteten Kragarmenden vorzugsweise zusätzlich mit dem oberen Teilprofil (6A) verschweißt sind.

## Claims

1. Securing device for a hydraulically actuable liftgate of a lorry, having a transverse support for the liftgate, which transverse support can be secured on the rear side of the vehicle frame and on which bearing flanges (4) having passages (5', 5'', 5''') for the bearing bolts of lifting and pivoting members of the liftgate are provided at a distance from one another symmetrically with respect to the longitudinal central plane of the vehicle, characterized in that the transverse support on the vehicle side is formed from an extruded aluminium box-type profile (1) which has an essentially tetragonal cross section and on its upper side (1') and on its lower side (1") has grooves (3', 3") which are continuous over the length of the profile and are intended for the positive and non-positive latching accommodation of the ends of cantilevered arms (4'', 4''') of the bearing flanges (4) for the lifting and pivoting members, the bearing flanges (4) being formed from sections of an extruded aluminium hollow profile, and in that bearing flanges (6) which are likewise formed by sections of an extruded aluminium hollow profile are provided on the end side of the liftgate, which bearing flanges have cylindrical passages (5'', 5''') for the accommodation of bearing bolts of the lifting and pivoting members, and are welded to the actual loading platform (9).

2. Securing device according to Claim 1, characterized in that those cantilevered-arm ends of the bearing flanges (4) which are latched into the longitudinal grooves (3', 3'') of the box-type profile (1) are additionally welded to the box-type profile (1) .

3. Securing device according to Claim 1 or 2, characterized in that the box-type profile (1) has undercut longitudinal grooves (2, 2') which are distributed over its circumference and are intended for accommodating the nuts of anchoring bolts (B) for securing the box-type profile on the vehicle frame (R).

4. Securing device according to Claim 3, characterized in that the longitudinal grooves (2, 2') are used for accommodating hydraulic and/or electric lines.

5. Securing device according to one of Claims 1 to 3, characterized in that ducts (12) which run in the longitudinal direction of the profile and are intended for guiding the hydraulic fluid are formed in the walls of the box-type profile (1), which ducts can be connected to the hydraulic lines of the hydraulic assembly and of the lifting and pivoting members via threaded holes (13) which are formed in the walls of the box-type profile at the connecting points of the hydraulic assembly and also of the lifting and pivoting members and reach as far as the ducts.

6. Securing device according to one of Claims 1 to 5, characterized in that the bearing flanges (6) which are provided on the end side of the liftgate are, on the side which faces away from their cylindrical passages (5", 5‴), provided with cantilevered arms (6", 6‴) via which they are welded to the actual loading platform (9).

7. Securing device according to one of Claims 1 to 5, characterized in that the bearing flanges (6) which are provided on the end side of the liftgate are in each case composed of two subprofiles (6A, 6B), an upper subprofile (6A) of which is welded to the loading platform (9) and a lower subprofile (6B) of which is latched positively and non-positively via cantilevered arms (4B', 4B") into grooves (6A', 6A") of the upper subprofile, and the latched-in cantilevered-arm ends are preferably additionally welded to the upper subprofile (6A).

## Revendications

1. Dispositif de fixation pour une plateforme de chargement actionnée hydrauliquement pour un véhicule utilitaire, comportant une traverse pour la plateforme de chargement qui est fixée à l'arrière du châssis de véhicule et sur laquelle sont prévues, à distance l'une de l'autre, de manière symétrique par rapport au plan médian longitudinal du véhicule, des joues-supports (4) munies de passages (5', 5", 5"') pour les axes de d'articulation d'organes de levage et de pivotement de la plateforme de chargement, caractérisé en ce que la traverse côté véhicule est formée d'un profilé (1) d'aluminium extrudé en forme de poutre creuse, à section essentiellement rectangulaire, qui, sur sa face supérieure (1') et sur sa face inférieure (1"), est pourvu de rainures (3', 3") continues s'étendant sur toute la longueur du profilé, pour le montage par complémentarité de formes et par serrage des extrémités de bras en porte-à-faux (4", 4"') appartenant aux joues-supports (4) pour les organes de levage et de pivotement, les joues-supports (4) étant formées de tronçons de profilé creux en aluminium, et en ce que des joues -supports (6), qui sont également formées de tronçons de profilé creux extrudé en aluminium, sont prévues sur la face frontale de la plateforme de chargement, lesquelles joues-supports comportent des passages cylindriques (5", 5"') destinés à recevoir les axes d'articulation des organes de levage et de pivotement et sont soudées à la plateforme de chargement (9) à proprement parler.

2. Dispositif de fixation selon la revendication 1, caractérisé en ce que les extrémités des bras en porte-à-faux des joues-supports (4) encliquetées dans les rainures longitudinales (3', 3") du profilé (1) en forme de poutre creuse sont en outre soudées audit profilé (1) en forme de poutre creuse.

3. Dispositif de fixation selon la revendication 1 ou 2, caractérisé en ce que le profilé (1) en forme de poutre creuse présente, réparties sur sa surface extérieure, des rainures longitudinales (2, 2') en contre-dépouille, destinées à recevoir les écrous de boulons de fixation (B) pour la fixation du profilé en forme de poutre creuse sur le châssis de véhicule (R).

4. Dispositif de fixation selon la revendication 3, caractérisé en ce que les rainures longitudinales (2, 2') servent au montage de conduites hydrauliques et/ou électriques.

5. Dispositif de fixation selon une des revendications 1 à 3, caractérisé en ce que des canaux (12) pour l'acheminement du liquide hydraulique, qui s'étendent dans la direction longitudinale du profilé, sont aménagés dans les parois du profilé (1) creux en forme de poutre, lesquels canaux sont reliés aux conduites hydrauliques du groupe hydraulique, voire des organes de levage et de pivotement, par l'intermédiaire de trous filetés (13) qui sont aménagés dans les parois du profilé creux en forme de poutre creuse, aux emplacements de raccordement du groupe hydraulique et des organes de levage et pivotement, et s'étendent jusqu'aux canaux.

6. Dispositif de fixation selon une des revendications 1 à 5, caractérisé en ce que les joues-supports (6) prévues sur la face frontale de la plateforme de chargement, sur leur face éloignée des passages (5", 5"') cylindriques, sont pourvues de bras en porte-à-faux (6", 6"'), par l'intermédiaire desquels elles sont soudées à la plateforme de chargement (9) à proprement parler.

7. Dispositif de fixation selon une des revendications 1 à 5, caractérisé en ce que les joues-supports (6) prévues sur la face frontale de la plateforme de chargement sont formées chaque fois de deux profilés élémentaires (6A, 6B), parmi lesquels un profilé élémentaire (6A) supérieur est soudé à la plateforme de chargement (9) et un profilé élémentaire (6B) inférieur est encliqueté avec complémentarité de formes et avec serrage par l'intermédiaire de bras en porte-à-faux (4B', 4B") dans des rainures (6A', 6A") du profilé élémentaire supérieur et que les extrémités encliquetées des bras, de préférence sont soudées au profilé élémentaire (6A) supérieur.
